(19) Europäisches Patentamt
European Patent Office
Office européen des brevets

(11) **EP 2 759 786 A1**

(12) **DEMANDE DE BREVET EUROPEEN**

(43) Date de publication:
**30.07.2014 Bulletin 2014/31**

(51) Int Cl.:
***F25B 49/00*** *(2006.01)*

(21) Numéro de dépôt: **14150257.5**

(22) Date de dépôt: **07.01.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **28.01.2013 FR 1350693**

(71) Demandeur: **Schneider Electric Industries SAS 92500 Rueil-Malmaison (FR)**

(72) Inventeur: **Ligeret, Christophe 38000 Grenoble (FR)**

(74) Mandataire: **Bié, Nicolas et al Schneider Electric Industries SAS Service Propriété Industrielle 35 rue Joseph Monier - CS 30323 92506 Rueil-Malmaison Cedex (FR)**

(54) **Procédé de diagnostic d'une machine de chauffage, ventilation et climatisation**

(57) L'invention concerne un procédé de diagnostic d'une machine de chauffage, ventilation et climatisation (HVAC) comportant au moins un compresseur (Comp) relié au condenseur à air (Cond) et destiné à assurer la circulation d'un fluide frigorigène (Ff), un évaporateur (Ev) relié au condenseur à air (Cond) via un détendeur (Det) et traversé par un fluide caloporteur (Fc), ledit condenseur à air comportant au moins un ventilateur (Vent). Ledit procédé permet de déterminer les enthalpies de la machine à l'aspiration par le compresseur, au refoulement du compresseur, en entrée du détendeur et en sortie du détendeur, ainsi que la surchauffe de la machine, en employant seulement trois mesures de température et la commande du compresseur.

*Fig. 3*

## Description

### Domaine technique de l'invention

La présente invention se rapporte à un procédé de diagnostic d'une machine de chauffage, ventilation et climatisation (HVAC).

### Etat de la technique

Pour la maintenance d'une machine de chauffage, ventilation et climatisation, plus communément appelé machine HVAC (pour « Heating, Ventilation and Air conditioning »), il est aujourd'hui nécessaire d'observer certaines grandeurs critiques en temps réel et de réaliser des analyses statistiques en vue de réaliser un diagnostic avancé. Pour cela, les solutions actuelles sont souvent complexes à mettre en oeuvre, nécessitant notamment l'emploi de beaucoup de capteurs et de modifier la structure de la machine pour la mise en place des capteurs.

Le but de l'invention est de proposer un procédé permettant de réaliser un diagnostic précis du fonctionnement d'une machine de chauffage, ventilation et climatisation (HVAC) avec un minimum de capteurs et de manière non intrusive. Plus particulièrement, la solution de l'invention n'emploie ni débitmètre, ni capteurs de pression et ni capteur de puissance électrique.

### Exposé de l'invention

Ce but est atteint par un procédé de diagnostic d'une machine de chauffage, ventilation et climatisation, ladite machine comportant au moins un compresseur relié au condenseur à air et destiné à assurer la circulation d'un fluide frigorigène, un évaporateur relié au condenseur à air via un détendeur et traversé par un fluide caloporteur, ledit condenseur à air comportant au moins un ventilateur, ledit procédé consistant à

- mesurer :

    - la température du fluide frigorigène à l'aspiration par le compresseur,
    - la température du fluide frigorigène en entrée du détendeur,
    - la température du fluide frigorigène en sortie du détendeur,

- déterminer ou à mesurer la température au refoulement du compresseur, et
- déterminer à partir des températures mesurées à l'aspiration par le compresseur, en entrée du détendeur et en sortie du détendeur, de la température mesurée ou estimée au refoulement du compresseur, de la commande du compresseur et d'un module thermodynamique :

    - les enthalpies de la machine à l'aspiration par le compresseur, au refoulement du compresseur, en entrée du détendeur et en sortie du détendeur,
    - la surchauffe de la machine.

Selon une particularité, le procédé consiste à déterminer le sous-refroidissement de la machine à partir des mesures de températures à l'aspiration par le compresseur, au refoulement du compresseur, en entrée du détendeur, en sortie du détendeur et des enthalpies déterminées.

Selon une autre particularité, le procédé consiste à déterminer la valeur de basse pression et la valeur de haute pression caractéristiques du diagramme enthalpique de la machine, à partir des mesures de températures à l'aspiration par le compresseur, en entrée du détendeur, en sortie du détendeur, des enthalpies déterminées et de la température estimée ou mesurée au refoulement du compresseur.

Selon une autre particularité, le procédé comporte une étape de détermination du débit du fluide frigorigène à travers le compresseur à partir de la masse volumique du fluide frigorigène, de la commande du compresseur et d'une fonction de la valeur de haute pression et de la valeur de basse pression.

Selon une autre particularité, le procédé comporte une étape de détermination de la puissance thermique du condenseur, et de la puissance thermique de l'évaporateur à partir du débit du fluide frigorigène et des enthalpies déterminées aux quatre points de mesure.

Selon une autre particularité, le procédé comporte une étape de détermination de la puissance électrique absorbée par le compresseur à partir du débit du fluide frigorigène et des enthalpies déterminées.

Selon une autre particularité, le procédé comporte une étape de détermination de la puissance électrique absorbée par chaque ventilateur du condenseur à air à partir de la commande appliquée à chaque ventilateur.

Selon une autre particularité, le procédé comporte une étape de détermination de la puissance électrique absorbée par chaque pompe permettant de faire circuler le fluide caloporteur à partir de la commande appliquée à chaque pompe.

Selon une autre particularité, le procédé comporte une étape de détermination d'un coefficient de performance instantané à partir de la puissance thermique de la machine et de la puissance électrique de la machine.

L'invention concerne également un système de diagnostic d'une machine de chauffage, ventilation et climatisation, ladite machine comportant au moins un compresseur relié au condenseur à air et destiné à assurer la circulation d'un fluide frigorigène, un évaporateur relié au condenseur à air via un détendeur et traversé par un fluide caloporteur, ledit condenseur à air comportant au moins un ventilateur, ledit système comportant :

- un capteur de température du fluide frigorigène à l'aspiration par le compresseur,
- un capteur de température du fluide frigorigène au refoulement du compresseur,
- un capteur de température du fluide frigorigène en entrée du détendeur,
- un capteur de température du fluide frigorigène en sortie du détendeur,
- une unité de commande et de traitement comprenant un module thermodynamique agencé pour déterminer, à partir des mesures de température et de la commande du compresseur :

  - les enthalpies de la machine aux quatre points de mesure de température,
  - la surchauffe de la machine.

Selon une particularité, le module thermodynamique est agencé pour déterminer le sous-refroidissement de la machine à partir des mesures de températures à l'aspiration par le compresseur, au refoulement du compresseur, en entrée du détendeur, en sortie du détendeur et des enthalpies déterminées.

Selon une autre particularité, le module thermodynamique est agencé pour déterminer la valeur de basse pression et la valeur de haute pression caractéristiques du diagramme enthalpique de la machine, à partir des mesures de températures à l'aspiration par le compresseur, en entrée du détendeur, en sortie du détendeur, des enthalpies déterminées et de la température estimée ou mesurée au refoulement du compresseur.

Selon une autre particularité, le module thermodynamique est agencé pour déterminer le débit du fluide frigorigène à travers le compresseur à partir de la masse volumique du fluide frigorigène, de la commande du compresseur et d'une fonction de la valeur de haute pression et de la valeur de basse pression.

Selon une autre particularité, le module thermodynamique est agencé pour déterminer la puissance thermique du condenseur et la puissance thermique de l'évaporateur à partir du débit du fluide frigorigène et des enthalpies déterminées aux quatre points de mesure.

Selon une autre particularité, l'unité de commande et de traitement comporte un module électrique agencé pour déterminer la puissance électrique absorbée par le compresseur à partir de du débit du fluide frigorigène et des enthalpies déterminées.

Selon une autre particularité, l'unité de commande et de traitement comporte un module électrique agencé pour déterminer la puissance électrique absorbée par chaque ventilateur du condenseur à air à partir de la commande appliquée à chaque ventilateur.

Selon une autre particularité, l'unité de commande et de traitement comporte un module électrique agencé pour déterminer la puissance électrique absorbée par chaque pompe permettant de faire circuler le fluide caloporteur à partir de la commande appliquée à chaque pompe.

Selon une autre particularité, le système comporte un module de diagnostic agencé pour déterminer un coefficient de performance instantané de la machine à partir de la puissance thermique et de la puissance électrique de la machine.

**Brève description des figures**

D'autres caractéristiques et avantages vont apparaître dans la description détaillée qui suit faite en regard des dessins annexés qui représentent :

- la figure 1 représente, de manière schématique, une machine de chauffage, ventilation et climatisation,

- la figure 2 représente un diagramme enthalpique permettant d'illustrer le principe de fonctionnement du module thermodynamique,

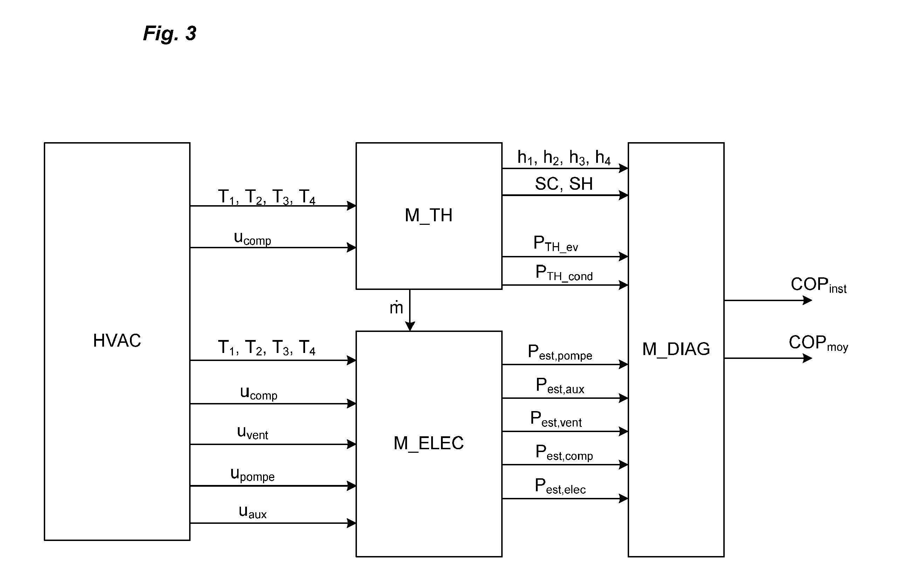

- la figure 3 représente, de manière schématique, le système de l'invention.

**Description détaillée d'au moins un mode de réalisation**

L'invention concerne la détection des défauts dans une machine de chauffage, ventilation et climatisation (HVAC).

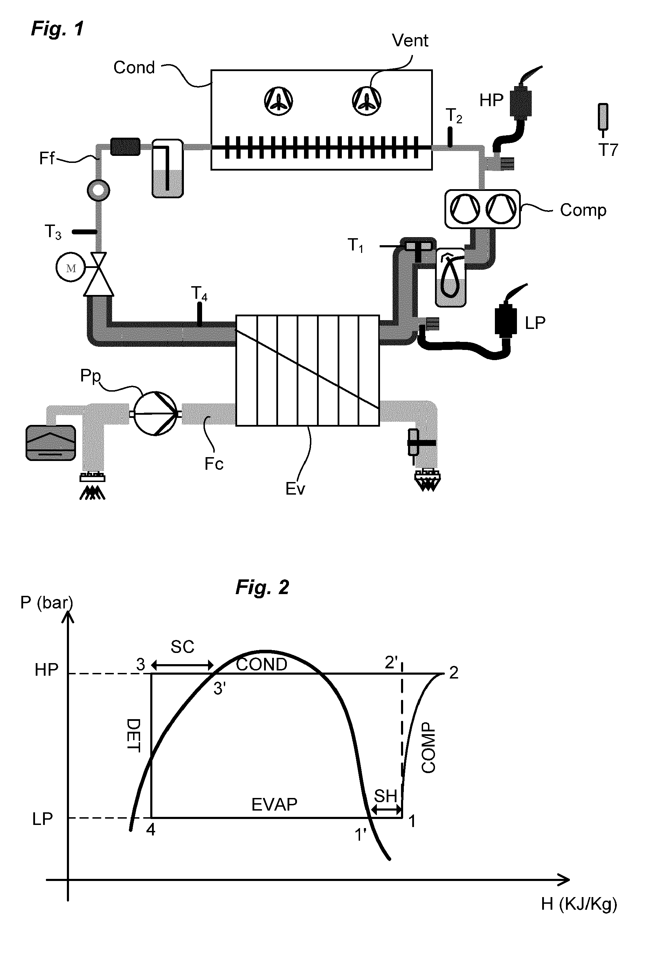

En référence à la figure 1, une telle machine comporte principalement :

- Un condenseur à air Cond permettant de faire passer un fluide frigorigène Ff de l'état gazeux à l'état liquide. Le condenseur à air Cond peut être par exemple de type à tubes et ailettes ou à microcanaux et peut comporter un ou plusieurs ventilateurs Vent permettant d'assurer un passage d'air à travers le condenseur à air Cond en vue de permettre la condensation du fluide frigorigène Ff.

- Un détendeur Det permettant de faire chuter la pression du fluide frigorigène Ff.

- Un évaporateur Ev permettant de faire passer le fluide frigorigène Ff de l'état gaz + liquide à l'état gazeux. L'évaporateur Ev est aussi traversé par un fluide caloporteur Fc, par exemple de l'air ou de l'eau glycolée, échangeant ses calories avec le fluide frigorigène Ff afin d'être chauffé ou refroidi.

- Un ou plusieurs compresseurs Comp destiné à aspirer le fluide frigorigène Ff à l'état gazeux en provenance de l'évaporateur Ev pour l'envoyer vers le condenseur à air Cond. Les compresseurs sont par exemple commandés par une ou plusieurs unités de commande.

- Une ou plusieurs pompes Pp de circulation permettant de faire circuler le fluide caloporteur Fc à travers l'évaporateur Ev.

Le procédé de l'invention permet de réaliser un diagnostic d'une telle machine, de manière non intrusive, c'est-à-dire sans avoir besoin d'arrêter la machine, et en utilisant un nombre limité de capteurs. L'ajout de capteurs supplémentaires permettra de réaliser un diagnostic plus avancé. La solution de l'invention permet d'effectuer de la maintenance prédictive et est compatible avec tout type de machine de chauffage, ventilation et climatisation.

Le procédé de l'invention est mis en oeuvre grâce à un système de diagnostic adapté sur la machine de chauffage, ventilation et climatisation.

Selon l'invention, le système est muni d'au moins trois capteurs de température positionnés sur la machine de la manière suivante :

- un capteur de température ($T_1$) pour mesurer la température du fluide frigorigène Ff à l'aspiration par le compresseur (point 1 sur la figure 2),
- un capteur de température ($T_3$) pour mesurer la température du fluide frigorigène en entrée du détendeur (point 3 sur la figure 2),
- un capteur de la température ($T_4$) du fluide frigorigène Ff en sortie du détendeur (point 4 sur la figure 2).

Si nécessaire, un autre capteur de température peut être employé. Ce capteur de température ($T_2$) est employé pour mesurer la température du fluide frigorigène Ff au refoulement du compresseur (point 2 sur la figure 2).

Le système comporte également une unité de commande et de traitement agencée pour exécuter un module thermodynamique M_TH chargé de déterminer des paramètres thermodynamiques de la machine et un module électrique M_ELEC chargé de déterminer des paramètres électriques de la machine.

A partir des trois mesures de températures, de la commande des compresseurs, le module thermodynamique M_TH peut déterminer les enthalpies $h_1$, $h_2$, $h_3$, $h_4$ du fluide frigorigène Ff au point 1, au point 2, au point 3 et au point 4. La figure 2, représentant un diagramme enthalpique d'un fluide frigorigène Ff, illustre le raisonnement mis en place par le module thermodynamique M_TH. Ce diagramme représente les changements d'état du fluide frigorigène Ff dans la machine en fonction de sa pression absolue (en bar) et de son enthalpie (en KJ/Kg).

**Méthode de calcul du débit de fluide frigorigène dans un compresseur**

Le débit de fluide frigorigène dans un compresseur est donné par la formule suivante :

$$\hat{\dot{m}}_{comp} = u_{comp} \times \rho(T_1, P_1) \times f(P_1, P_2)$$

Avec :

- $\hat{\dot{m}}_{comp}$ qui est le débit estimé de fluide frigorigène circulant dans un compresseur,
- $u_{comp}$ qui est la commande du compresseur exprimée en % (0% à 100%),
- $\rho(T_1, P_1)$ qui est la masse volumique (en $kg/m^3$) du fluide frigorigène à l'entrée du groupe de compresseur (point 1),
- $f(P_1, P_2)$ qui est la fonction de rendement volumétrique du compresseur : il s'agit d'un polynôme de 2 variables (la basse pression $P_1$(=LP) et la haute pression $P_2$(=HP)), c'est-à-dire :

$$f(P_1, P_2) = a_0 + a_1 \times P_1 + a_2 \times P_2 + a_3 \times P_1^2 + a_4 \times P_1 \times P_2 + a_5 \times P_2^2$$

Les coefficients $a_0, a_1, a_2, a_3, a_4, a_5$ peuvent être déterminés :

- par le constructeur,
- à partir des tables de données fournies par le fabriquant de compresseurs et une méthode des moindres carrés pour trouver un polynôme qui approxime au mieux ces données,
- à partir de mesures via un débitmètre ultrason sur un compresseur dont on ne peut pas récupérer de données techniques.

Le débit de fluide frigorigène total circulant dans un circuit de fluide frigorigène (condenseur, détendeur, évaporateur) est égal à la somme de tous les débits circulants dans tous les compresseurs.

$$\hat{\dot{m}} = \sum_{i=1}^{nb\_compresseurs} \hat{\dot{m}}_{comp,i}$$

**Méthode de calcul de l'enthalpie de sortie d'un compresseur**

Pour cela, le module thermodynamique M_TH détermine tout d'abord l'entropie au point 1 :

$$s_1(T_1, P_1)$$

En supposant que la transformation est isentropique, l'entropie en sortie du compresseur (si la transformation est isentropique) est égale à celle d'entrée :

$$s_{2,isent,comp} = s_1(T_1, P_1)$$

A partir de $s_{2,isent,comp}$ et de la haute pression estimée précédemment $P_2$, le module thermodynamique M_TH détermine l'enthalpie de la transformation isentalpique :

$$h_{2,isent,comp} = h(s_{2,isent,comp}, P_2)$$

Le module thermodynamique M_TH calcule en fonction de $T_1$, $P_1$ et $P_2$ un rendement isentropique :

$$\eta_{isent,comp} = b_0 + b_1 \times T_1 + b_2 \times \tau + b_3 \times T_1^2 + b_4 \times T_1 \times \tau + b_5 \times \tau^2$$

Où $\tau$ est le taux de compression du compresseur : $\tau = \dfrac{P_2}{P_1}$ et les coefficients $b_0, b_1, b_2, b_3, b_4, b_5$ sont déterminés en fonction des données du constructeur.

Le module thermodynamique M_TH détermine ensuite l'enthalpie en sortie du compresseur :

$$h_{2,comp} = h_1 + \frac{\left(h_{2,isent,comp} - h_1\right)}{\eta_{isent,comp}}$$

**Méthode de calcul de l'enthalpie au point 2**

Lorsque la machine comporte plusieurs compresseurs, le module thermodynamique M_TH détermine l'enthalpie $h_2$ au point 2 par le barycentre de toutes les enthalpies de sorties de chaque compresseur, pondérée par le débit de fluide frigorigène dans chaque compresseur.

$$h_2 = \sum_{i=1}^{nb\_compresseurs} \lambda_i \times h_{2,comp,i} \text{ avec } \lambda_i = \frac{\hat{\dot{m}}_{comp,i}}{\sum_{k=1}^{n} \hat{\dot{m}}_{comp,k}}$$

**Méthode d'évaluation de la température du fluide frigorigène au point 2**

Grâce aux calculs effectués précédemment, le module thermodynamique M_TH peut déterminer une température estimée au point 2, sans employer de capteur.

Le module thermodynamique M_TH détermine la température au point 2 en fonction de l'enthalpie h2 et de la haute pression P2.

$$T_{2,est} = T_2\left(h_2, P_2\right)$$

**Méthode pour évaluer le sous-refroidissement**

A partir de $T_1$, $T_2$, $T_3$, $T_4$ et des états des différents actionneurs, il n'est pas possible de déterminer directement le sous-refroidissement, noté SC.

Le module thermodynamique M_TH fait alors une hypothèse sur ce sous refroidissement SC en fonction du type de machine thermique utilisée (par exemple, on suppose que SC = 0K) et le module thermodynamique M_TH déroule les calculs. Le module thermodynamique détermine ainsi une température estimée $T_{2,est}$ au point 2. Si un capteur de température est présent au point 2, le module thermodynamique M_TH compare la température estimée $T_{2,est}$ avec la mesure réelle de la température au point 2. Le module thermodynamique peut ensuite affiner la valeur du sous-refroidissement SC en faisant converger la valeur calculée de la température estimée $T_{2,est}$ au point 2 vers la température réelle.

L'erreur $\varepsilon_{T_2} = |T_{2,est} - T_2|$ doit donc être minimale et converger vers zéro.

Le module thermodynamique balaie par exemple les valeurs de sous-refroidissement de 0K à 20K (avec un pas de 0,1 K).

A partir de la valeur de sous-refroidissement sélectionnée, des mesures des températures $T_1$, $T_2$, $T_3$, $T_4$ et de la commande des compresseurs, en référence à la figure 2, le module thermodynamique M_TH calcule successivement :

- La pression au point 3, fonction de la température $T_3$ mesurée et de la valeur de sous-refroidissement sélectionnée :

$$P_3 = P_3(T_3 + SC)$$

- L'enthalpie au point 3, fonction de la température $T_3$ et de la pression $P_3$ :

$$h_3 = h_3(T_3, P_3)$$

- L'enthalpie au point 4, égale à l'enthalpie déterminée au point 3 :

$$h_4 = h_3$$

- La pression au point 4, fonction de la température $T_4$ mesurée et de l'enthalpie $h_4$ : $P_4 = P_4(T_4, h_4)$
- La pression au point 1, égale à la pression $P_4$ au point 4 :

$$P_1 = P_4$$

- L'enthalpie au point 1, fonction de la température $T_1$ mesurée et de la pression $P_1$ déterminée :

$$h_1 = h_1(T_1, P_1)$$

- L'entropie au point 1, fonction de la température $T_1$ mesurée et de la pression $P_1$ déterminée :

$$s_1 = s_1(T_1, P_1)$$

- La masse volumique (en kg / m$^3$) du fluide frigorigène Ff à l'entrée du groupe de compresseur (point 1) :

$$\rho_1 = \rho_1(T_1, P_1)$$

- La valeur de la température $T_{1,sat}$ au point 1', fonction de la pression $P_1$ :

$$T_{1,sat} = T_{1,sat}(P_1)$$

- La valeur de la surchauffe SH, fonction de la température $T_1$ mesurée et de la température $T_{1,sat}$ au point 1' :

$$SH = T_1 - T_{1,sat}$$

- Le débit du fluide frigorigène Ff dans tous les compresseurs, comme décrit ci-dessus :

$$\hat{\dot{m}}_{comp,i} = u_{comp,i} \times \rho(T_1,P_1) \times f(P_1,P_2\,), \forall i \in \{1...nb\_comp\}$$

- L'enthalpie de sortie de chaque compresseur, comme décrit ci-dessus :

$$h_{2,comp,i},\ \forall\ i \in \{1...nb\_comp\}$$

- L'enthalpie au point 2, comme décrit ci-dessus :

$$h_2 = \sum_{i=1}^{nb\_compresseurs} \lambda_i \times h_{2,comp,i}\ \text{avec}\ \lambda_i = \frac{\hat{\dot{m}}_{comp,i}}{\sum_{k=1}^{n} \hat{\dot{m}}_{comp,k}}$$

- La température $T_{2,est}$ estimée au point 2, fonction de l'enthalpie au point 2 et de la pression au point 2 :

$$T_{2,est} = T_2(h_2,P_2)$$

- L'erreur à corriger entre la température estimée au point 2 et la température réelle mesurée :

$$\varepsilon_{T_2} = \left| T_{2,est} - T_2 \right|$$

Le module thermodynamique corrige la valeur de sous-refroidissement SC jusqu'à ce que l'erreur à corriger entre la température estimée au point 2 et la température mesurée au point 2 soit minimale.

Pour plus de précisions et de robustesse, le système peut également comporter des capteurs pour mesurer la basse pression (LP) et la haute pression (HP).

Connaissant le débit du fluide frigorigène à travers le compresseur Comp, le module thermodynamique M_TH détermine également les puissances thermiques.

**Pour le condenseur :**

$$P_{TH\_cond} = (h_2 - h_3) \times \dot{m}$$

Où $h_2$ est l'enthalpie en sortie du compresseur (point 2), $h_3$ est l'enthalpie en sortie du détendeur (point 3) et m est le débit de fluide frigorigène dans le compresseur.

**Pour l'évaporateur :**

$$P_{TH\_ev} = (h_1 - h_3) \times \dot{m}$$

Où $h_1$ est l'enthalpie en entrée du compresseur (point 1), $h_3$ est l'enthalpie en sortie du détendeur (point 3) et m est le débit de fluide frigorigène dans le compresseur.

Par ailleurs, le système comporte également un module électrique M_ELEC chargé de déterminer les paramètres suivants :

- puissance électrique $P_{est,comp}$ absorbée par le compresseur Comp,

- puissance électrique $P_{est,pompe}$ absorbée par chaque pompe Pp employée pour faire circuler le fluide caloporteur Fc.

- puissance électrique $P_{est,vent}$ absorbée par chaque ventilateur Vent du condenseur Cond,

- puissance électrique $P_{est,aux}$ absorbée par chaque auxiliaire.

Pour déterminer ces paramètres, le système nécessite des entrées supplémentaires aux températures mesurées par les capteurs. Ces entrées supplémentaires sont la commande $u_{comp}$ du compresseur, la commande $u_{vent}$ des ventilateurs, la commande $u_{pompe}$ de chaque pompe et la commande de chaque auxiliaire. Ces commandes sont issues des unités de commande de chacun des constituants de la machine et sont appliquées en entrée du module électrique M_ELEC.

**Pour un compresseur :**

$$P_{est,comp} = \left(h_2 - h_1\right) \times \dot{m}$$

Où $h_1$ est l'enthalpie en entrée du compresseur (point 1), $h_2$ est l'enthalpie en sortie du compresseur (point 2) et m est le débit de fluide frigorigène qui circule dans le compresseur.

**Pour un ventilateur :**

$$P_{est,vent} = g\!\left(u_{vent}\right)$$

Où $u_{vent}$ est la commande du ventilateur et g est une fonction qui caractérise les propriétés de l'association ventilateurs + circuit aéraulique (qui peut être réduit au seul échangeur thermique).

Cette fonction peut être prise comme égale au cube de la commande du ventilateur.

$$g\!\left(u_{vent}\right) = g_0 \times u_{vent}^{\,3}$$

$g_0$ peut être déterminée :

- à partir de la plaque signalétique du ventilateur (on néglige dans ce cas l'impact de l'échangeur thermique),
- à partir des caractéristiques du ventilateur (courbes de charge, rendement...) et des caractéristiques de l'échangeur pour calculer les pertes de charge (nombre d'ailettes, taille des ailettes, nombre et taille des tubes...),
- à partir d'une ou plusieurs mesures électriques temporaires à différentes vitesses de fonctionnement (si présence d'un variateur de vitesse).

Dans les 2 derniers cas, on peut affiner le modèle de consommation du ventilateur en utilisant par exemple la fonction suivante ou en prenant un polynôme de degré supérieur :

$$g\!\left(u_{vent}\right) = g_1 \times u_{vent} + g_2 \times u_{vent}^{\,2} + g_3 \times u_{vent}^{\,3}$$

La puissance absorbée par l'ensemble de tous les ventilateurs sera égale à la somme de toutes les puissances de chaque ventilateur.

$$P_{est,vent} = \sum_{i=1}^{nb\_ventilateurs} P_{est,ventilateur,i}$$

**Pour une pompe :**

$$P_{est,pompe} = h(u_{pompe})$$

Où $u_{pompe}$ est la commande de la pompe et h est une fonction qui caractérise les propriétés de l'association pompe + circuit hydraulique.

Cette fonction peut être prise comme égale au cube de la commande de la pompe.

$$h(u_{pompe}) = h_0 \times u_{pompe}^3$$

$h_0$ peut être déterminée :

- à partir de la plaque signalétique de la pompe (on néglige dans ce cas l'impact du circuit hydraulique),
- à partir des caractéristiques de la pompe (courbes de charge, rendement...) et des caractéristiques du circuit hydraulique pour calculer les pertes de charge (longueur et diamètre des tuyaux, nombre de coudes, vannes et échangeurs présents sur le circuit, hauteur du bâtiment...),
- à partir d'une ou plusieurs mesures électriques temporaires à différentes vitesses de fonctionnement (si présence d'un variateur de vitesse).

Dans les 2 derniers cas, on peut affiner le modèle de consommation de la pompe en employant la fonction suivante ou en prenant un polynôme de degré supérieur :

$$h(u_{pompe}) = h_1 \times u_{pompe} + h_2 \times u_{pompe}^2 + h_3 \times u_{pompe}^3$$

La puissance absorbée par l'ensemble de toutes les pompes sera égale à la somme de toutes les puissances de chaque pompe :

$$P_{est,pompes} = \sum_{i=1}^{nb\_pompes} P_{est,pompe,i}$$

**Pour les auxiliaires** :

Pour calculer la puissance électrique absorbée, le module électrique M_ELEC part des données fournies dans les documentations techniques ou de mesures électriques réalisées ponctuellement.

Par exemple, pour évaluer la puissance électrique absorbée par la résistance antigel, le module électrique M_ELEC relève au préalable sa puissance nominale (présente sur la plaque signalétique) et récupère sa commande $U_{aux}$ (état de son contacteur) pour déterminer si elle fonctionne ou non.

La puissance électrique totale $P_{est,elec}$ est déterminée par le module électrique M_ELEC en additionnant les puissances électriques déterminées pour chaque composant de la machine.

$$P_{est,élec} = P_{est,comp} + P_{est,vent} + P_{est,pompes} + P_{est,aux} + \cdots$$

Bien entendu, les puissances électriques estimées pourraient être remplacées par des mesures réalisées à l'aide de capteurs de puissance ("powermeter"). Il est également possible de mixer des valeurs de puissance mesurées et des valeurs de puissance calculées.

Le système comporte également un module de diagnostic M_DIAG permettant de déterminer différents indicateurs de diagnostic.

Un premier indicateur de diagnostic correspond au coefficient de performance instantané $COP_{inst}$ défini de la manière suivante :

$$COP_{inst} = \frac{P_{thermique}}{P_{est,elec}}$$

$P_{thermique}$ est la puissance thermique utile produite par la machine.

Lorsque la machine produit du froid :

$$P_{thermique} = P_{TH\_ev}$$

Lorsque la machine produit du chaud :

$$P_{thermique} = P_{TH\_cond} \cdot$$

$P_{est,élec}$ est la puissance électrique instantanée absorbé par la machine et est déjà définie ci-dessus.

Un deuxième indicateur de diagnostic correspond à un coefficient de performance moyen, s'exprimant de la manière suivante : $COP_{moyen} = \dfrac{E_{thermique}}{E_{élec}}$ avec $E_{thermique} = \int P_{thermique}$ et $E_{elec} = \int P_{est,elec}$ (dans le cas d'un calculateur numérique, par exemple un automate programmable, l'intégrale sera remplacée par une somme finie).

Le coefficient de performance moyen peut être calculé sur des fenêtres variables : fenêtre de 1 seconde, 1 minute, 1 heure, 1 journée, 1 semaine, 1 mois, ...

## Revendications

1. Procédé de diagnostic d'une machine de chauffage, ventilation et climatisation, ladite machine comportant au moins un compresseur (Comp) relié au condenseur à air (Cond) et destiné à assurer la circulation d'un fluide frigorigène (Ff), un évaporateur (Ev) relié au condenseur à air (Cond) via un détendeur (Det) et traversé par un fluide caloporteur (Fc), ledit condenseur à air comportant au moins un ventilateur (Vent), ledit procédé étant **caractérisé en ce qu'**il consiste à :

   - mesurer :

      - la température ($T_1$) du fluide frigorigène à l'aspiration par le compresseur,
      - la température ($T_3$) du fluide frigorigène en entrée du détendeur,
      - la température ($T_4$) du fluide frigorigène en sortie du détendeur,

   - déterminer ou à mesurer la température ($T_2$) au refoulement du compresseur, et
   - déterminer à partir des températures mesurées à l'aspiration par le compresseur, en entrée du détendeur et en sortie du détendeur, de la température mesurée ou estimée au refoulement du compresseur, de la commande du compresseur ($_{Ucomp}$) et d'un module thermodynamique (M_TH) :

      - les enthalpies de la machine à l'aspiration par le compresseur, au refoulement du compresseur, en entrée du détendeur et en sortie du détendeur,
      - la surchauffe de la machine.

**2.** Procédé selon la revendication 1, **caractérisé en ce qu'**il consiste à déterminer le sous-refroidissement (SC) de la machine à partir des mesures de températures ($T_1$-$T_3$) à l'aspiration par le compresseur, au refoulement du compresseur, en entrée du détendeur, en sortie du détendeur et des enthalpies ($h_1$-$h_4$) déterminées.

**3.** Procédé selon la revendication 1, **caractérisé en ce qu'**il consiste à déterminer la valeur (LP) de basse pression et la valeur (HP) de haute pression caractéristiques du diagramme enthalpique de la machine, à partir des mesures de températures ($T_1$-$T_3$) à l'aspiration par le compresseur, en entrée du détendeur, en sortie du détendeur, des enthalpies déterminées et de la température (T2) estimée ou mesurée au refoulement du compresseur.

**4.** Procédé selon la revendication 1, **caractérisé en ce qu'**il comporte une étape de détermination du débit du fluide frigorigène à travers le compresseur à partir de la masse volumique du fluide frigorigène (FF), de la commande ($u_{comp}$) du compresseur et d'une fonction de la valeur de haute pression (HP) et de la valeur de basse pression (LP).

**5.** Procédé selon la revendication 4, **caractérisé en ce qu'**il comporte une étape de détermination de la puissance thermique du condenseur, et de la puissance thermique de l'évaporateur à partir du débit du fluide frigorigène et des enthalpies déterminées aux quatre points de mesure.

**6.** Procédé selon la revendication 5, **caractérisé en ce qu'**il comporte une étape de détermination de la puissance électrique absorbée par le compresseur à partir du débit du fluide frigorigène et des enthalpies déterminées.

**7.** Procédé selon la revendication 6, **caractérisé en ce qu'**il comporte une étape de détermination de la puissance électrique absorbée par chaque ventilateur du condenseur à air à partir de la commande ($u_{vent}$) appliquée à chaque ventilateur.

**8.** Procédé selon la revendication 7 **caractérisé en ce qu'**il comporte une étape de détermination de la puissance électrique absorbée par chaque pompe (Pp) permettant de faire circuler le fluide caloporteur (FC) à partir de la commande (Upump) appliquée à chaque pompe.

**9.** Procédé selon la revendication 8, **caractérisé en ce qu'**il comporte une étape de détermination d'un coefficient de performance instantané ($COP_{inst}$) à partir de la puissance thermique de la machine et de la puissance électrique de la machine.

**10.** Système de diagnostic d'une machine de chauffage, ventilation et climatisation, ladite machine comportant au moins un compresseur (Comp) relié au condenseur à air (Cond) et destiné à assurer la circulation d'un fluide frigorigène (Ff), un évaporateur (Ev) relié au condenseur à air (Cond) via un détendeur (Det) et traversé par un fluide caloporteur (Fc), ledit condenseur à air comportant au moins un ventilateur (Vent), ledit système étant **caractérisé en ce qu'**il comporte :

  - un capteur de température du fluide frigorigène à l'aspiration par le compresseur,
  - un capteur de température du fluide frigorigène au refoulement du compresseur,
  - un capteur de température du fluide frigorigène en entrée du détendeur,
  - un capteur de température du fluide frigorigène en sortie du détendeur,
  - une unité de commande et de traitement comprenant un module thermodynamique agencé pour déterminer, à partir des mesures de température et de la commande du compresseur :

    - les enthalpies de la machine aux quatre points de mesure de température,
    - la surchauffe de la machine.

**11.** Système selon la revendication 10, **caractérisé en ce que** le module thermodynamique est agencé pour déterminer le sous-refroidissement (SC) de la machine à partir des mesures de températures ($T_1$-$T_3$) à l'aspiration par le compresseur, au refoulement du compresseur, en entrée du détendeur, en sortie du détendeur et des enthalpies ($h_1$-$h_4$) déterminées.

**12.** Système selon la revendication 10, **caractérisé en ce que** le module thermodynamique est agencé pour déterminer la valeur (LP) de basse pression et la valeur (HP) de haute pression caractéristiques du diagramme enthalpique de la machine, à partir des mesures de températures ($T_1$-$T_3$) à l'aspiration par le compresseur, en entrée du détendeur, en sortie du détendeur, des enthalpies déterminées et de la température ($T_2$) estimée ou mesurée au refoulement du compresseur.

**13.** Système selon la revendication 10, **caractérisé en ce que** le module thermodynamique est agencé pour déterminer débit du fluide frigorigène à travers le compresseur à partir de la masse volumique du fluide frigorigène (FF), de la commande ($u_{comp}$) du compresseur et d'une fonction de la valeur de haute pression (HP) et de la valeur de basse pression (LP).

**14.** Système selon la revendication 13, **caractérisé en ce que** le module thermodynamique est agencé pour déterminer la puissance thermique du condenseur et la puissance thermique de l'évaporateur à partir du débit du fluide frigorigène et des enthalpies déterminées aux quatre points de mesure.

**15.** Système selon la revendication 14, **caractérisé en ce que** l'unité de commande et de traitement comporte un module électrique (M_ELEC) agencé pour déterminer la puissance électrique absorbée par le compresseur à partir de du débit du fluide frigorigène et des enthalpies déterminées.

**16.** Système selon la revendication 15, **caractérisé en ce que** l'unité de commande et de traitement comporte un module électrique agencé pour déterminer la puissance électrique absorbée par chaque ventilateur du condenseur à air à partir de la commande ($u_{vent}$) appliquée à chaque ventilateur.

**17.** Système selon la revendication 16, **caractérisé en ce que** l'unité de commande et de traitement comporte un module électrique agencé pour déterminer la puissance électrique absorbée par chaque pompe permettant de faire circuler le fluide caloporteur (FC) à partir de la commande ($u_{pompe}$) appliquée à chaque pompe.

**18.** Système selon la revendication 17, **caractérisé en ce qu'**il comporte un module de diagnostic agencé pour déterminer un coefficient de performance ($COP_{inst}$) instantané de la machine à partir de la puissance thermique et de la puissance électrique de la machine.

Fig. 1

Fig. 2

*Fig. 3*

Europäisches
Patentamt

European
Patent Office

Office européen
des brevets

**RAPPORT DE RECHERCHE EUROPEENNE**

Numéro de la demande

EP 14 15 0257

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2006/032245 A1 (KATES LAWRENCE [US]) 16 février 2006 (2006-02-16) * alinéa [0140] - alinéa [0145]; figures 9A-9H, 10, 10A, 10B * ----- | 1-18 | INV. F25B49/00 |
| A | US 2007/089438 A1 (SINGH ABTAR [US] ET AL) 26 avril 2007 (2007-04-26) * alinéa [0095] - alinéa [0099]; figure 25 * ----- | 1-18 | |

**DOMAINES TECHNIQUES RECHERCHES (IPC)**

F25B

Le présent rapport a été établi pour toutes les revendications

| Lieu de la recherche | Date d'achèvement de la recherche | Examinateur |
|---|---|---|
| Munich | 14 février 2014 | Amous, Moez |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
..............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 14 15 0257

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-02-2014

| Document brevet cité au rapport de recherche | Date de publication | Membre(s) de la famille de brevet(s) | Date de publication |
|---|---|---|---|
| US 2006032245    A1 | 16-02-2006 | US    2006032245  A1 | 16-02-2006 |
| | | US    2006032246  A1 | 16-02-2006 |
| | | US    2006032247  A1 | 16-02-2006 |
| | | US    2006032248  A1 | 16-02-2006 |
| | | US    2006032379  A1 | 16-02-2006 |
| | | US    2006196196  A1 | 07-09-2006 |
| | | US    2006196197  A1 | 07-09-2006 |
| | | US    2008015797  A1 | 17-01-2008 |
| | | US    2008016888  A1 | 24-01-2008 |
| | | US    2008216495  A1 | 11-09-2008 |
| | | US    2008223051  A1 | 18-09-2008 |
| | | US    2012260804  A1 | 18-10-2012 |
| | | US    2013287063  A1 | 31-10-2013 |
| | | US    2014000290  A1 | 02-01-2014 |
| | | US    2014000291  A1 | 02-01-2014 |
| | | US    2014000292  A1 | 02-01-2014 |
| | | US    2014000293  A1 | 02-01-2014 |
| | | US    2014000294  A1 | 02-01-2014 |
| | | US    2014012422  A1 | 09-01-2014 |
| US 2007089438    A1 | 26-04-2007 | AUCUN | |

EPO FORM P0460

Pour tout renseignement concernant cette annexe : voir Journal Officiel de l'Office européen des brevets, No.12/82